(19) **Europäisches Patentamt / European Patent Office / Office européen des brevets**

(11) **EP 2 337 392 B1**

(12) **EUROPEAN PATENT SPECIFICATION**

(45) Date of publication and mention
of the grant of the patent:
**18.09.2013 Bulletin 2013/38**

(21) Application number: **09815621.9**

(22) Date of filing: **25.09.2009**

(51) Int Cl.:
*H04L 29/06* (2006.01)          *H04W 24/00* (2009.01)
*H04W 28/10* (2009.01)          *H04L 12/801* (2013.01)

(86) International application number:
**PCT/CN2009/074220**

(87) International publication number:
**WO 2010/034252 (01.04.2010 Gazette 2010/13)**

(54) **TIME SEQUENCE NUMBER JUMPING DETECTING AND PROCESSING METHOD AND DEVICE**

ZEITSEQUENZNUMMERNSPRUNGERKENNUNGS- UND VERARBEITUNGSVERFAHREN SOWIE VORRICHTUNG

PROCÉDÉ ET DISPOSITIF DE TRAITEMENT D'UN TEST DE SAUT D'UN NOMBRE DE SÉQUENCE TEMPORELLE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **28.09.2008 CN 200810168478**

(43) Date of publication of application:
**22.06.2011 Bulletin 2011/25**

(73) Proprietor: **Huawei Technologies Co., Ltd.
Shenzhen, Guangdong Province 518129 (CN)**

(72) Inventor: **YAN, Kai
Shenzhen
Guangdong 518129 (CN)**

(74) Representative: **Körber, Martin Hans et al
Mitscherlich & Partner
Patent- und Rechtsanwälte
Sonnenstrasse 33
80331 München (DE)**

(56) References cited:
**EP-A1- 1 473 939          CN-A- 1 491 000
CN-A- 1 531 276          CN-A- 1 561 078
CN-A- 1 885 856          CN-A- 101 369 880
US-A1- 2008 151 901      US-A1- 2009 143 029**

• **BERTOGLIO L ET AL: "Intermedia synchronization for videoconference over IP", SIGNAL PROCESSING. IMAGE COMMUNICATION, ELSEVIER SCIENCE PUBLISHERS, AMSTERDAM, NL, vol. 15, no. 1-2, 1 September 1999 (1999-09-01), pages 149-164, XP004180642, ISSN: 0923-5965, DOI: 10.1016/S0923-5965(99)00028-4**

**Description**

**FIELD OF THE INVENTION**

The present invention relates to the field of communications technologies, and in particular, to a method and a device for detecting and processing Time Sequence Number (TSN) jumping.

**BACKGROUND OF THE INVENTION**

With the development of communication networks based on the Internet Protocol (IP), a Base Station Subsystem (BSS) side also develops based on the IP. Before the IP is introduced, a Time Division Multiplex (TDM) interface of a BSS uses strict timing, and therefore the mode for processing a received voice frame is simple. After the IP is introduced, the IP BSS is inevitably faced with the problems such as delay, jitter, and disorder. To solve the preceding problems, the IP BSS adds a Time Sequence Number (TSN) field in a Real-time Transport Protocol (RTP) voice frame sent through an A interface, and a Base Transfer and Receive Station (BTS) at a receiving end can eliminate the phenomena such as jitter and disorder through a jitter buffer mechanism. Since the Global System for Mobile Communications (GSM) system does not have the global reference time, an RTP source generally calculates the TSN according to the local time. The TSN, however, may jump, so that the jitter buffer at the receiving end is forcedly adjusted, thereby impacting the voice quality.

The paper "Intermedia synchronization for videoconference over IP" (SIGNAL PROCESSING: IMAGE COMMUNICATION, ELSEVIER SCIENCE PUBLISHERS, AMSTERDAM, NL, vol. 15, no. 1-2, 1 September 1999) relates to dealing with the problem of audio and video synchronization issues for real-time audio-visual communication over IP-based networks. Starting from the real-time transport protocol (RTP) specifications (Schulzrinne, 1995), it provides an accurate description on how to recover a reliable absolute time reference for audio and video signals from header information in RTP and RTP control protocol packets. Such temporal information allows synchronizing both media within acceptable perceptual bounds for reconstruction at any receiver end, in a possibly multi-point videoconierence. This may occur independently of the fact that all (audio/video) packets reach destination, or that multiple replications of such packets arrive at destination. The proposed solution does not take into account the possible different delays that may be introduced between the different communication points, thus resulting eventually in potential jitters in the reconstruction of the audio-visual streams between different receivers. Each receiver handles its reconstruction independently of any transmission/processing delay. In order to ensure a better quality of the reconstructed material, priority is given to audio information. If the audio streams anticipate the video stream, the receiver simply discards video packets. Conversely, when video is ahead of audio information, the video decoding stage is interrupted till audio information arrives. Experimental simulations over a LAN have demonstrated the validity of the proposed approach.

US2008/0151901A1 relates to a solution in which a relationship is determined between radio link protocol (RLP) sequence numbers in received RLP packets and real-time protocol (RTP) sequence numbers in RTP packets decompressed from the received RLP packets. An RTP sequence number associated with a compressed RTP packet is determined based on the determined relationship and at least one of the RLP sequence numbers of the received RLP packet or packets forming the compressed RTP packet. An RTP time stamp may be determined in a similar manner.

In the prior art, it is detected whether the TSN in the frame sent by the RTP source jumps by setting an empirical threshold and comparing the empirical threshold with the TSN, so as to trigger the adjustment of the jitter buffer at the receiving end.

During the process of implementing the present invention, the inventor discovers that the prior art at least has the following problem. The detecting method implemented by setting the empirical threshold has poor performance, and reduces voice quality of the IP BSS.

**SUMMARY OF THE INVENTION**

Embodiments of the present invention provide a method and a device for detecting and processing time sequence number (TSN) jumping, so as to improve voice quality of an IP BSS.

A method for detecting and processing TSN jumping provided in an embodiment of the present invention includes:

acquiring a source identifier in a received frame;
detecting whether the acquired source identifier is changed; and
determining that a TSN in the received frame jumps if it is detected that the source identifier is changed.

A device for detecting and processing TSN jumping provided in an embodiment of the present invention includes:

a first acquiring module, configured to acquire a source identifier in a received frame;
a detecting module, configured to detect whether the source identifier acquired by the first acquiring module is changed; and
a determining module, configured to determine that a TSN in the received frame jumps if the detecting module detects that the source identifier is changed.

The technical solutions according to the embodiments of the present invention have the following advantages: Because the source identifier is used as the basis of detecting TSN jumping, the jumping of the TSN in a received frame can be detected in time, thereby preventing frame loss caused by adjustment of the jitter buffer in response to TSN jumping, and improving voice quality of the IP BSS.

## BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description describe only some embodiments of the present invention, and persons of ordinary skill in the art can derive other drawings from the accompanying drawings without creative efforts.

FIG. 1 is a first flow chart of a method for detecting and processing TSN jumping according to an embodiment of the present invention;
FIG. 2 is a second flow chart of a method for detecting and processing TSN jumping according to an embodiment of the present invention;
FIG. 3 is a third flow chart of a method for detecting and processing TSN jumping according to an embodiment of the present invention;
FIG. 4 is a first structure diagram of a device for detecting and processing TSN jumping according to an embodiment of the present invention;
FIG. 5 is a second structure diagram of a device for detecting and processing TSN jumping according to an embodiment of the present invention; and
FIG. 6 is a third structure diagram of a device for detecting and processing TSN jumping according to an embodiment of the present invention.

## DETAILED DESCRIPTION OF THE EMBODIMENTS

The technical solutions of the present invention will be clearly and completely described in the following with reference to the accompanying drawings. It is obvious that the embodiments to be described are only a part rather than all of the embodiments of the present invention. Persons of ordinary skill in the art can derive other embodiments from the embodiments given herein without making any creative effort, and all such embodiments are covered in the protection scope of the present invention.

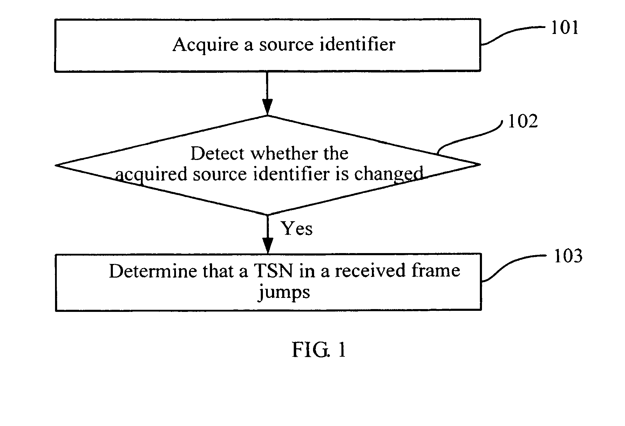

FIG. 1 is a first flow chart of a method for detecting and processing TSN jumping according to an embodiment of the present invention. As shown in FIG. 1, an embodiment of the method for detecting and processing TSN jumping is provided. The method includes the following steps:

Step 101: Acquire a source identifier.

A source according to the embodiment of the present invention is equipment capable of sending frames, such as a Base Station Controller (BSC) and a Universal Media Gateway (UMG).

Taking the Real-time Transport Protocol (RTP) for example, the source identifier may be located in a Synchronization Source Identifier (SSRC) field in a frame sent by the source. The embodiment of the present invention uses the SSRC field as the basis of detecting the TSN jumping. Definitely, it should be understood that, the source identifier may also be located in other fields, which is not limited in the present invention.

It should be further noted that, the preceding description is only exemplary, and the technical solution of the present invention is applicable to not only the RTP but also various scenarios and protocols for detecting the TSN jumping.

Step 102: Detect whether the acquired source identifier is changed. If it is detected that the source identifier is changed, step 103 is performed.
Step 103: Determine that a TSN in a received frame jumps.

If the SSRC field in the frame is not changed, the source is not switched, so the TSN in the received frame does not jump. If the SSRC field in the frame is changed, the RTP source is switched, so the TSN in the received frame jumps.

If it is detected that the acquired SSRC field is changed, it is determined that the TSN in the received frame jumps. After it is determined that the TSN in the received frame jumps, optionally, an accumulative TSN jumping difference after the current jumping may be acquired, and the TSN in the received frame after the current jumping is compensated according to the accumulative TSN jumping difference after the current jumping. After the TSN in the received frame after the current jumping is compensated, the compensated TSN may be converted to a TSN of less than 32 bits, and then the converted TSN is sent to the BTS. The acquiring the accumulative TSN jumping difference after the current jumping includes: recording a TSN in a last frame before the current jumping and a TSN in a first frame after the current jumping; calculating a current jumping difference according to the TSN in the last frame before the current jumping and the TSN in the first frame after the current jumping; and calculating the accumulative TSN jumping difference after the current jumping according to the current jumping difference and an accumulative TSN jumping difference before the current jumping.

The technical solution according to the embodiment of the present invention has the following advantages: Because the source identifier is used as the basis of detecting the TSN jumping, the jumping of the TSN in a received frame can be detected in time, thereby preventing frame loss caused by adjustment of the jitter buffer in response to TSN jumping, and improving voice quality of the IP BSS.

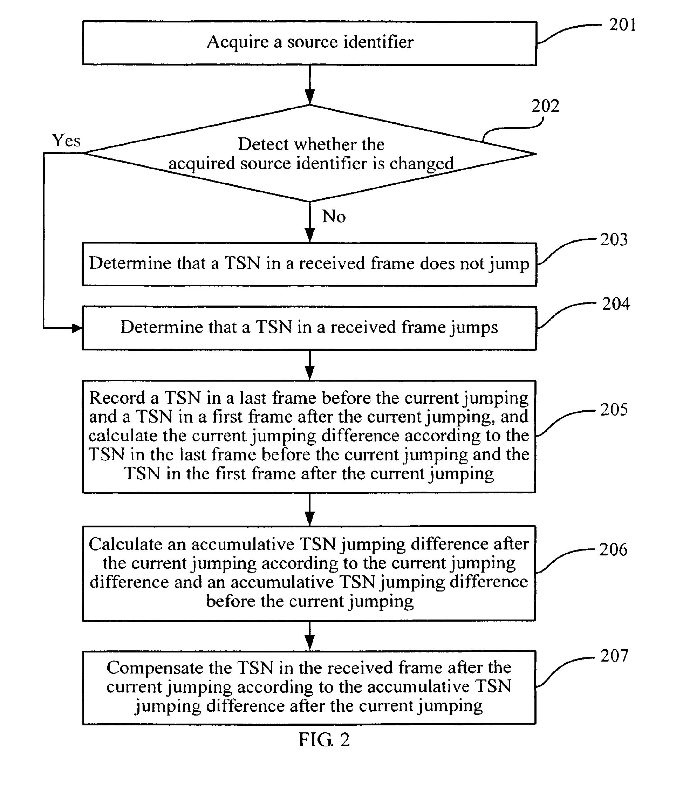

FIG. 2 is a second flow chart of a method for detecting and processing TSN jumping according to an embodiment of the present invention. As shown in FIG 2, another embodiment of the method for detecting and processing TSN jumping is provided. The method includes the following steps:

Step 201: Acquire a source identifier.

A source according to the embodiment of the present invention is equipment capable of sending frames, such as a BSC and a UMG.

Taking the RTP for example, the source identifier may be located in the SSRC field in a frame sent by the source. The embodiment of the present invention uses the SSRC field as the basis of detecting the TSN jumping. Definitely, it should be understood that, the source identifier may also be located in other fields, which is not limited in the present invention.

It should be further noted that, the preceding description is only exemplary, and the technical solution of the present invention is applicable to not only the RTP but also various scenarios and protocols for detecting the TSN jumping.

Step 202: Detect whether the acquired source identifier is changed. If it is detected that the source identifier is changed, step 204 is performed. If it is detected that the source identifier is not changed, step 203 is performed.

Step 203: Determine that a TSN in a received frame does not jump.

Step 204: Determine that a TSN in a received frame jumps.

If the SSRC field in the frame is not changed, the source is not switched, so the TSN in the received frame does not jump. If the SSRC field in the frame is changed, the RTP source is switched, so the TSN in the received frame jumps. If it is detected that the SSRC field in the frame is changed, it is determined that the TSN in the received frame jumps. If it is detected that the SSRC field in the frame is not changed, it is determined that the TSN in the received frame does not jump. After it is detected that the TSN in the received frame jumps, optionally, an accumulative TSN jumping difference after the current jumping may be acquired, and the TSN in the received frame after the current jumping is compensated according to the accumulative TSN jumping difference after the current jumping. The specific implementation procedures can be performed according to the following steps.

Step 205: Record a TSN in a last frame before the current jumping and a TSN in a first frame after the current jumping, and calculate a current jumping difference according to the TSN in the last frame before the current jumping and the TSN in the first frame after the current jumping.

The current jumping difference is calculated according to the following formula:

$$SingleDiff = TSN_1 - TSN_0 - 1$$

where TSN0 is the TSN in the last frame before the current jumping, TSN1 is the TSN in the first frame after the current jumping, and SingleDiff is the current jumping difference.

Step 206: Calculate the accumulative TSN jumping difference after the current jumping according to the current jumping difference and an accumulative TSN jumping difference before the current jumping.

$$AccDiff_n = AccDiff_{n-1} + SingleDiff$$

where SingleDiff is the current jumping difference, AccDiffn-1 is the accumulative TSN jumping difference before the current jumping, and AccDiffn is the accumulative TSN jumping difference after the current jumping. The accumulative TSN jumping difference after the current jumping is an accumulation of TSN jumping differences generated by all the detected TSN jumping (including the current jumping). Each time it is determined that the TSN in the received frame jumps, the current jumping difference SingleDiff is calculated according to the TSN in the last frame before the current jumping and the TSN in the first frame after the current jumping, and the SingleDiff is added to the accumulative TSN jumping difference before the current jumping AccDiffn-1. Then, the TSN in the received frame after the current jumping may be compensated according to the AccDiffn. If the current jumping is the first jumping, AccDiffn equals SingleDiff.

Step 207: Compensate the TSN in the received frame after the current jumping according to the accumulative TSN jumping difference after the current jumping.

The TSN in the received frame after the current jumping can be compensated according to the following formula:

$$TSN'_a = TSN_a - AccDiff_n$$

where TSNa is the TSN before the compensation, TSNa' is the TSN after the compensation, and AccDiffn is the accumulative TSN jumping difference after the current jumping.

The TSN in the received frame after the current jumping is compensated by using AccDiff'', so that the influence of all the TSN jumping before the frame is received on the TSN in the frame is eliminated. After the TSN in the received frame after the current jumping is compensated, the compensated TSN may be converted to a TSN of less than 32 bits, and then the converted TSN is sent to the BTS.

The technical solution according to the embodiment of the present invention has the following advantages: Because the SSRC field is used as the source identifier and the source identifier is used as the basis of detecting the TSN jumping, the jumping of the TSN in a received frame can be detected in time, thereby preventing frame loss caused by adjustment of the jitter buffer in response to TSN jumping, and improving voice quality of the IP BSS. Optionally, if it is detected that the TSN jumps, the TSN after jumping may be compensated, thereby eliminating the influence of the TSN jumping (for example, preventing frame loss caused by the TSN jumping) and improving voice quality of the IP BSS.

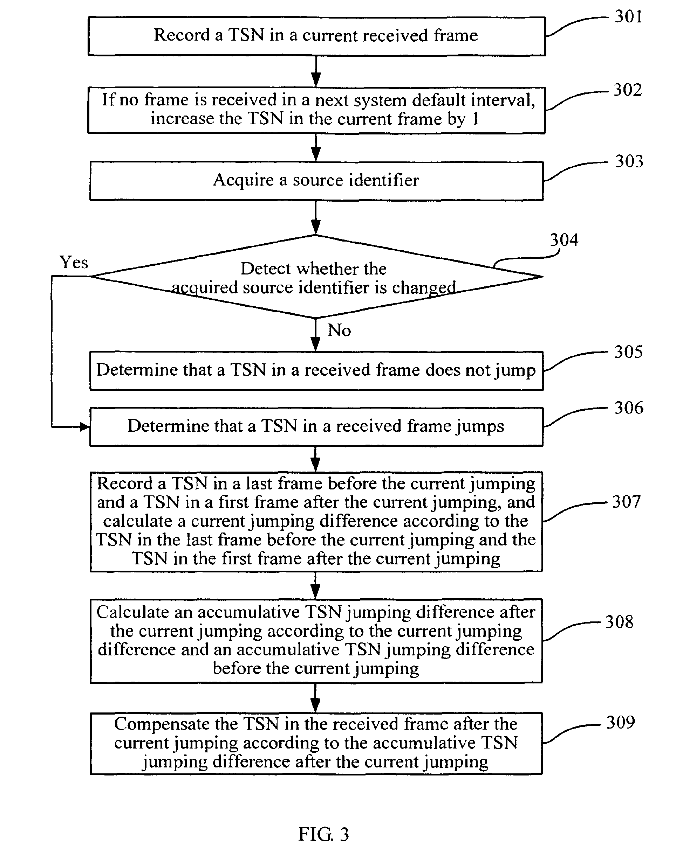

FIG. 3 is a third flow chart of a method for detecting and processing TSN jumping according to an embodiment of the present invention. As shown in FIG. 3, a further embodiment of the method for detecting and processing TSN jumping is provided, which is applicable to the situation where downlink discontinuous transmission (DTX) is enabled. The method includes the following steps.

Step 301: Record a TSN in a current received frame.

When the downlink DTX is enabled, a Voice Activity Detection (VAD) technology is used. The frame transmission is stopped when the voice signal is not transferred, thereby restraining useless information from being sent and reducing effective transmission time, so that a reasonable difference is maintained between the TSN in the last frame before the current jumping and the TSN in the first frame after the current jumping. Therefore, when the downlink DTX is enabled, the mechanism for detecting and processing TSN jumping is different from that in the preceding embodiments in that: each time after the frame is received, the TSN in the current frame needs to be recorded.

Step 302: If no frame is received in a next system default interval, increase the TSN in the current frame by 1.

If no frame is received in the next system default interval because the frame transmission is stopped when the voice signal is not transferred, the reasonable change caused by enabling the DTX needs to be included in the TSN, so the TSN in the current frame is increased by 1.

Step 303: Acquire a source identifier.

A source according to the embodiment of the present invention is equipment capable of sending frames, such as a BSC and a UMG.

Taking the RTP for example, the source identifier may be located in the SSRC field in a frame sent by the source. The embodiment of the present invention uses the SSRC field as the basis of detecting TSN jumping. Definitely, it should be understood that, the source identifier may also be located in other fields, which is not limited in the present invention.

It should be further noted that, the preceding description is only exemplary, and the technical solution of the present invention is applicable to not only the RTP but also various scenarios and protocols for detecting the TSN jumping.

Step 304: Detect whether the acquired source identifier is changed. If it is detected that the source identifier is changed, step 306 is performed. If it is detected that the source identifier is not changed, step 305 is performed.

Step 305: Determine that a TSN in a received frame does not jump.

Step 306: Determine that a TSN in a received frame jumps.

If the SSRC field in the frame is not changed, the source is not switched, so the TSN in the received frame does not jump. If the SSRC field in the frame is changed, the RTP source is switched, so the TSN in the received frame jumps. If it is detected that the SSRC field in the frame is changed, it is determined that the TSN in the received frame jumps. If it is detected that the SSRC field in the frame is not changed, it is determined that the TSN in the received frame does not jump. After it is detected that the TSN in the received frame jumps, optionally, an accumulative TSN jumping difference after the current jumping may be acquired, and the TSN in the received frame after the current jumping is compensated according to the accumulative TSN jumping difference after the current jumping. The specific implementation procedures can be performed according to the following steps.

Step 307: Record a TSN in a last frame before the current jumping and a TSN in a first frame after the current jumping, and calculate a current jumping difference according to the TSN in the last frame before the current jumping and the TSN in the first frame after the current jumping.

The current jumping difference is calculated according to the following formula:

$$SingleDiff = TSN_1 - TSN_0 - 1$$

where TSN0 is the TSN in the last frame before the current jumping, TSN1 is the TSN in the first frame after the current jumping, and SingleDiff is the current jumping difference.

Step 308: Calculate the accumulative TSN jumping difference after the current jumping according to the current jumping difference and an accumulative TSN jumping difference before the current jumping. The accumulative TSN jumping difference after the current jumping is calculated according to the following formula:

$$AccDiff_n = AccDiff_{n-1} + SingleDiff$$

where SingleDiff is the current jumping difference, AccDiffn-1 is the accumulative TSN jumping difference before the current jumping, and AccDiffn is the accumulative TSN jumping difference after the current jumping. The accumulative TSN jumping difference after the current jumping is an accumulation of TSN jumping differences generated by all the detected TSN jumping (including the current jumping). Each time it is determined that the TSN in the received frame jumps, the current jumping difference SingleDiff is calculated according to the TSN in the last frame before the current jumping and the TSN in the first frame after the current jumping, and the SingleDiff is added to the accumulative TSN jumping difference before the current jumping AccDiffn-1. Then, the TSN in the received frame after the current jumping may be compensated according to the AccDiffn. If the current jumping is the first jumping, AccDiffn equals SingleDiff.

Step 309: Compensate the TSN in the received frame after the current jumping according to the accumulative TSN jumping difference after the current jumping.

The TSN in the received frame after the current jumping can be compensated according to the following formula:

$$TSN_a^{'} = TSN_a - AccDiff_n$$

where TSNa is the TSN before the compensation, TSNa is the TSN after the compensation, and AccDiffn is the accumulative TSN jumping difference after the current jumping. After the TSN in the received frame after the current jumping is compensated, the compensated TSN may be converted to a TSN of less than 32 bits, and then the converted TSN is sent to the BTS. The TSN in the received frame after the current jumping is compensated by using AccDiffn, so that the influence of all the TSN jumping before the frame is received on the TSN in the frame is eliminated.

The technical solution according to the embodiment of the present invention has the following advantages: Because the SSRC field is used as the source identifier and the source identifier is used as the basis of detecting TSN jumping, the jumping of the TSN in a received frame can be detected in time, thereby preventing frame loss caused by adjustment of the jitter buffer in response to TSN jumping, and improving voice quality of the IP BSS. Optionally, if it is detected that the TSN jumps, the TSN after jumping may be compensated, thereby eliminating the influence of the TSN jumping (for example, preventing frame loss caused by the TSN jumping) and improving voice quality of the IP BSS. Furthermore, the TSN in the current received frame is recorded when the downlink DTX is enabled, and the TSN in the current frame is increased by 1 if no frame is received in the next system default interval, so as to guarantee that only the reasonable change caused by enabling the DTX is included in the TSN output by the BSC to the BTS.

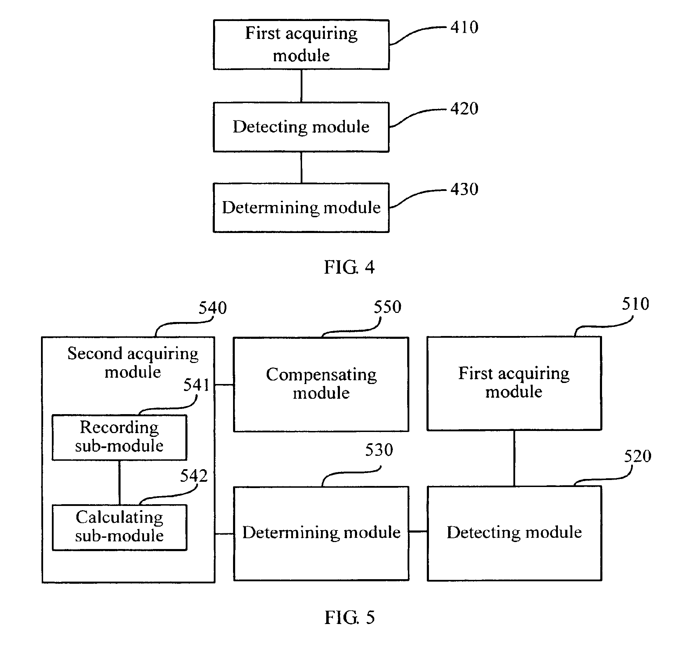

FIG. 4 is a first structure diagram of a device for detecting and processing TSN jumping according to an embodiment of the present invention. As shown in FIG. 4, an embodiment of the device for detecting and processing TSN jumping is provided. The device includes a first acquiring module 410, a detecting module 420, and a determining module 430.

The first acquiring module 410 is configured to acquire a source identifier.

A source according to the embodiment of the present invention is equipment capable of sending frames, such as a BSC and a UMG.

Taking the RTP for example, the source identifier may be located in the SSRC field in a frame sent by the source. The embodiment of the present invention uses the SSRC field as the basis of detecting TSN jumping. Definitely, it should be understood that, the source identifier may also be located in other fields, which is not limited in the present invention.

It should be further noted that, the preceding description is only exemplary, and the technical solution of the present invention is applicable to not only the RTP but also various scenarios and protocols for detecting the TSN jumping.

The detecting module 420 is configured to detect whether the source identifier acquired by the first acquiring module 410 is changed.

The determining module 430 is configured to determine that the TSN in the received frame jumps if the detecting module 420 detects that the source identifier is changed.

If it is detected that the SSRC field in the frame is changed, it is determined that the TSN in the received frame jumps. If it is detected that the SSRC field in the frame is not changed, it is determined that the TSN in the received frame does not jump.

The determining module 430 is further configured to determine that the TSN in the received frame does not jump if the detecting module 420 detects that the source identifier is not changed.

The specific steps and implementation procedures applying the device according to the embodiment of the present invention are similar to those in the preceding embodiment and are not described again here.

The technical solution according to the embodiment of the present invention has the following advantages: Because the device uses the source identifier as the basis of detecting TSN jumping, the jumping of the TSN in a received frame can be detected in time, thereby preventing frame loss caused by adjustment of the jitter buffer in response to TSN jumping, and improving voice quality of the IP BSS.

FIG. 5 is a second structure diagram of a device for detecting and processing TSN jumping according to an embodiment of the present invention. As shown in FIG. 5, another embodiment of the device for detecting and processing TSN jumping is provided. The device includes a first acquiring module 510, a detecting module 520, and a determining module 530.

The first acquiring module 510 is configured to acquire a source identifier.

A source according to the embodiment of the present invention is equipment capable of sending frames, such as a BSC and a UMG

Taking the RTP for example, the source identifier may be located in the SSRC field in a frame sent by the source. The embodiment of the present invention uses the SSRC field as the basis of detecting TSN jumping. Definitely, it should be understood that, the source identifier may also be located in other fields, which is not limited in the present invention.

It should be further noted that, the preceding description is only exemplary, and the technical solution of the present invention is applicable to not only the RTP but also various scenarios and protocols for detecting the TSN jumping.

The detecting module 520 is configured to detect whether the source identifier acquired by the first acquiring module 510 is changed.

The determining module 530 is configured to determine that the TSN in the received frame jumps if the detecting module 520 detects that the source identifier is changed.

If the SSRC field in the frame is not changed, the source is not switched, so the TSN in the received frame does not jump. If the SSRC field in the frame is changed, the RTP source is switched, so the TSN in the received frame jumps. If it is detected that the SSRC field in the frame is changed, it is determined that the TSN in the received frame jumps. If it is detected that the SSRC field in the frame is not changed, it is determined that the TSN in the received frame does not jump.

The determining module 530 is further configured to determine that the TSN in the received frame does not jump if the detecting module 520 detects that the source identifier is not changed.

Optionally, the device may further include a second acquiring module 540 and a compensating module 550.

The second acquiring module 540 is configured to acquire an accumulative TSN jumping difference after the current jumping if the determining module 530 determines that the TSN in the received frame jumps.

After it is determined that the TSN in the received frame jumps, the accumulative TSN jumping difference after the current jumping may be acquired so as to compensate the TSN in the received frame after the current jumping.

The compensating module 550 is configured to compensate the TSN in the received frame after the current jumping according to the accumulative TSN jumping difference after the current jumping.

The TSN in the received frame after the current jumping can be compensated according to the following formula:

$$TSN'_a = TSN_a - AccDiff_n$$

where TSNa is the TSN before the compensation, TSNa' is the TSN after the compensation, and AccDiffn is the accumulative TSN jumping difference after the current jumping.

The accumulative TSN jumping difference after the current jumping $AccDiff_n$, which is used to compensate the TSN in the received frame after the current jumping, is the accumulation of jumping differences generated by all the TSN jumping (including the current jumping) before the frame is received. The TSN in the received frame after the current jumping is compensated by using the $AccDiff_n$, so that the influence of all the TSN jumping before the frame is received on the TSN in the frame is eliminated.

The second acquiring module 540 includes a recording sub-module 541 and a calculating sub-module 542.

The recording sub-module 541 is configured to record a TSN in a last frame before the current jumping and a TSN in a first frame after the current jumping, and calculate a current jumping difference according to the TSN in the last frame before the current jumping and the TSN in the first frame after the current jumping.

The current jumping difference is calculated according to the following formula:

$$SingleDiff = TSN_l - TSN_0 - 1$$

where TSN0 is the TSN in the last frame before the current jumping, TSN1 is the TSN in the first frame after the current jumping, and SingleDiff is the current jumping difference.

The calculating sub-module 542 is configured to calculate the accumulative TSN jumping difference after the current jumping according to the current jumping difference and an accumulative TSN jumping difference before the current jumping. The accumulative TSN jumping difference after the current jumping is calculated according to the following formula:

$$AccDiff_n = AccDiff_{n-1} + SingleDiff$$

where SingleDiff is the current jumping difference, AccDiffn-1 is the accumulative TSN jumping difference before the current jumping, and AccDiffn is the accumulative TSN jumping difference after the current jumping. Each time it is determined that the TSN in the received frame jumps, the current jumping difference SingleDiff is calculated according to the TSN in the last frame before the current jumping and the TSN in the first frame after the current jumping, and the SingleDiff is added to the accumulative TSN jumping difference before the current jumping AccDiffn-1. Then, the TSN in the received frame after the current jumping is compensated according to AccDiffn. If the current jumping is the first jumping, AccDiffn equals SingleDiff. After the TSN in the received frame after the current jumping is compensated, the compensated TSN may be converted to a TSN of less than 32 bits, and then the converted TSN is sent to the BTS.

The specific steps and implementation procedures applying the device according to the embodiment of the present invention are similar to those in the preceding embodiment and are not described again here.

The technical solution according to the embodiment of the present invention has the following advantages. Because the device uses the SSRC field as the source identifier and the source identifier is used as the basis of detecting TSN jumping, the jumping of the TSN in a received frame can be detected in time, thereby preventing frame loss caused by adjustment of the jitter buffer in response to, and improving voice quality of the IP BSS. Optionally, if it is detected that the TSN jumps, the TSN after jumping may be compensated, thereby eliminating the influence of the TSN jumping (for example, preventing frame loss caused by the TSN jumping) and improving voice quality of the IP BSS.

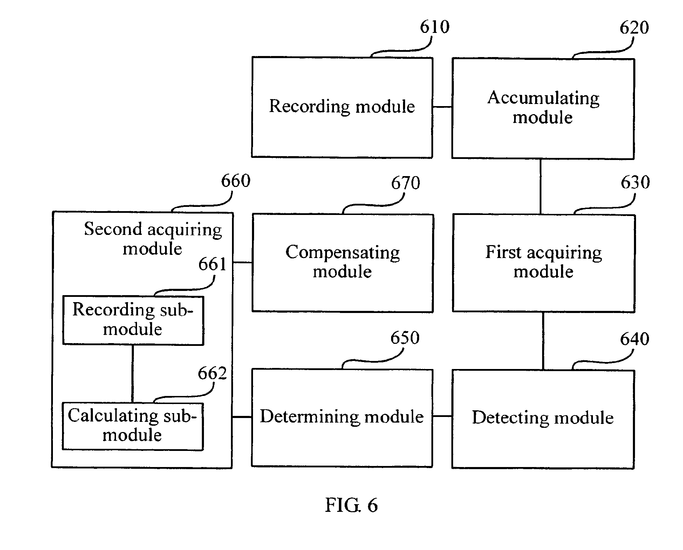

FIG. 6 is a third structure diagram of a device for detecting and processing TSN jumping according to an embodiment of the present invention. As shown in FIG. 6, a further embodiment of the device for detecting and processing TSN jumping is provided, which is applicable to downlink DTX. The device includes a recording module 610, an accumulating module 620, a first acquiring module 630, a detecting module 640, and a determining module 650.

The recording module 610 is configured to record a TSN in a current received frame.

When the downlink DTX is enabled, a VAD technology is used. The frame transmission is stopped when the voice signal is not transferred, thereby restraining useless information from being sent and reducing effective transmission time, so that the reasonable difference is maintained between the TSN in the last frame before the current jumping and the TSN in the first frame after the current jumping. Therefore, when the downlink DTX is enabled, the mechanism for detecting TSN jumping is different from that in the preceding embodiment in that: each time after receiving the frame, the recording module 610 records the TSN in the current frame.

The accumulating module 620 is configured to increase the TSN in the current frame by 1 if no frame is received in a next system default interval.

If no frame is received in the next system default interval because the frame transmission is stopped when the voice signal is not transferred, the reasonable change caused by enabling the DTX needs to be included in the TSN, so the accumulating module 620 increases the TSN in the current frame is increased by 1.

The first acquiring module 630 is configured to acquire a source identifier.

A source according to the embodiment of the present invention is equipment capable of sending frames, such as a BSC and a UMG.

Taking the RTP as an example, the source identifier may be located in the SSRC field in a frame sent by the source. The embodiment of the present invention uses the SSRC field as the basis of detecting TSN jumping. Definitely, it should be understood that, the source identifier may also be located in other fields, which is not limited in the present invention.

It should be further noted that, the preceding description is only exemplary, and the technical solution of the present invention is applicable to not only the RTP but also various scenarios and protocols for detecting the TSN jumping.

The detecting module 640 is configured to detect whether the source identifier acquired by the first acquiring module 630 is changed.

The determining module 650 is configured to determine that the TSN in the received frame jumps if the detecting module 640 detects that the source identifier is changed.

If the SSRC field in the frame is not changed, the source is not switched, so the TSN in the received frame does not jump. If the SSRC field in the frame is changed, the RTP source is switched, so the TSN in the received frame jumps. If it is detected that the SSRC field in the frame is changed, it is determined that the TSN in the received frame jumps. If it is detected that the SSRC field in the frame is not changed, it is determined that the TSN in the received frame does not jump.

The determining module 650 is further configured to determine that the TSN in the received frame does not jump if the detecting module 640 detects that the source identifier is not changed.

Optionally, the device may further include a second acquiring module 660 and a compensating module 670.

The second acquiring module 660 is configured to acquire an accumulative TSN jumping difference after the current jumping if the determining module 650 determines that the TSN in the received frame jumps.

After it is determined that the TSN in the received frame jumps, an accumulative TSN jumping difference after the current jumping can be acquired so as to compensate the TSN in the received frame after the current jumping.

The compensating module 670 is configured to compensate the TSN in the received frame after the current jumping according to the accumulative TSN jumping difference after the current jumping.

The TSN in the received frame after the current jumping can be compensated according to the following formula:

$$TSN'_a = TSN_a - AccDiff_n$$

where TSNa is the TSN before the compensation, TSNa' is the TSN after the compensation, and AccDiffn is the accumulative TSN jumping difference after the current jumping.

The accumulative TSN jumping difference after the current jumping $AccDiff_n$, which is used to compensate the TSN in the received frame after the current jumping, is the accumulation of jumping differences generated by all the TSN jumping (including the current jumping) before the frame is received. The TSN in the received frame after the current jumping is compensated by using the $AccDiff_n$, so that the influence of all the TSN jumping before the frame is received on the TSN in the frame is eliminated.

The second acquiring module 660 includes a recording sub-module 661 and a calculating sub-module 662.

The recording sub-module 661 is configured to record a TSN in a last frame before the current jumping and a TSN in a first frame after the current jumping, and calculate a current jumping difference according to the TSN in the last frame before the current jumping and the TSN in the first frame after the current jumping.

The current jumping difference is calculated according to the following formula:

$$SingleDiff = TSN_l - TSN_0 - 1$$

where TSN0 is the TSN in the last frame before the current jumping, TSN1 is the TSN in the first frame after the current jumping, and SingleDiff is the current jumping difference.

The calculating sub-module 662 is configured to calculate the accumulative TSN jumping difference after the current jumping according to the current jumping difference and an accumulative TSN jumping difference before the current jumping. The accumulative TSN jumping difference after the current jumping is calculated according to the following formula:

$$AccDiff_n = AccDiff_{n-1} + SingleDiff$$

where SingleDiff is the current jumping difference, AccDiffn-1 is the accumulative TSN jumping difference before the current jumping, and AccDiffn is the accumulative TSN jumping difference after the current jumping. Each time it is determined that the TSN in the received frame jumps, the current jumping difference SingleDiff is calculated according to the TSN in the last frame before the current jumping and the TSN in the first frame after the current jumping, and the SingleDiff is added to the accumulative TSN jumping difference before the current jumping AccDiffn-1. Then, the TSN in the received frame after the current jumping is compensated according to AccDiffn. If the current jumping is the first jumping, AccDiffn equals SingleDiff. After the TSN in the received frame after the current jumping is compensated, the compensated TSN may be converted to a TSN of less than 32 bits, and then the converted TSN is sent to the BTS.

The specific steps and implementation procedures applying the device according to the embodiment of the present invention are similar to those in the preceding embodiment and are not described again here.

The technical solution according to the embodiment of the present invention has the following advantages: Because the device uses the SSRC field as the source identifier and the source identifier is used as the basis of detecting TSN jumping, the jumping of the TSN in a received frame can be detected in time, thereby preventing frame loss caused by adjustment of the jitter buffer in response to TSN jumping, and improving voice quality of the IP BSS. Optionally, if it is detected that the TSN jumps, the TSN after jumping may be compensated, thereby eliminating the influence of the TSN jumping (for example, preventing frame loss caused by the TSN jumping) and improving voice quality of the IP BSS. Furthermore, the device records the TSN in the current received frame when the downlink DTX is enabled and increases the TSN in the current frame by 1 if no frame is received in the next system default interval, so as to guarantee that only the reasonable change caused by enabling the DTX is included in the TSN output by the BSC to the BTS.

Through the above description of the implementation, it is clear to persons skilled in the art that the present invention may be implemented through hardware, or through software plus a necessary universal hardware platform. But in many cases, implementing the present invention through software is an exemplary implementation manner. Based on this, the above technical solutions or the part that makes contributions to the prior art can be substantially embodied in the form of a software product. The computer software product may be stored in a computer readable storage medium and contain several instructions to instruct computer equipment (for example, a personal computer, a server, or network equipment) to perform the method described in the embodiments of the present invention.

Finally, it should be noted that, the relation terms such as first and second are only used to distinguish an entity or operation from another entity or operation, but do not necessarily require or imply the actual relation or order between these entities or operations. Furthermore, the term "including", "comprising" or any other variant is intended to cover non- exclusive inclusion, so that the process, method, article or equipment including a series of elements includes not only those elements but also other elements that are not clearly listed or the intrinsic elements of the process, method, article or equipment. Without more restraint, the statement "including an element" does not exclude another same element in the process, method, article or equipment including the element.

The above descriptions are merely exemplary embodiments of the present invention. It should be noted by persons of ordinary skill in the art that modifications and improvements may be made without departing from the principle of the present invention, which should be construed as falling within the scope of the present invention.

**Claims**

1.  A method for detecting and processing time sequence number jumping, **characterized by** comprising:

    acquiring a source identifier in a received frame (201);
    detecting whether the acquired source identifier is changed (202);
    determining that a time sequence number, TSN, in the received frame jumps if it is detected that the source identifier is changed (203, 204);
    **characterized in that** the method further comprises:

    when determining that the TSN in the received frame jumps, acquiring an accumulative TSN jumping difference after a current jumping; and
    compensating the TSN in the received frame after the current jumping by substracting the accumulative TSN jumping difference after the current jumping from the TSN of the received frame after the current jumping (207);
    wherein the acquiring the accumulative TSN jumping difference after the current jumping comprises: recording a TSN in a last frame before the current jumping and a TSN in a first frame after the current jumping; calculating a current jumping difference according to the TSN in the last frame before the current jumping and the TSN in the first frame after the current jumping 205; and calculating the accumulative TSN jumping difference after the current jumping according to the current jumping difference and an accumulative TSN jumping difference before the current jumping (206).

2.  The method according to claim 1, further comprising:

    Determining that the TSN in the received frame does not jump if it is detected that the source identifier is not changed.

3.  The method according to claim 1 or 2, wherein
    the source identifier is located in a Synchronization Source Identifier, SSRC, field in the received frame.

4.  The method according to claim 1 or 2, wherein when downlink discontinuous transmission, DTX, is enabled, before the acquiring the source identifier in the received frame, the method further comprises:

    recording the TSN in the current received frame; and
    if no frame is received in a next system default interval, increasing the TSN in the current frame by 1.

5.  A device for detecting and processing time sequence number jumping, **characterized by** comprising:

    a first acquiring module (510, 630), configured to acquire a source identifier in a received frame;
    a detecting module (520, 640), configured to detect whether the source identifier acquired by the first acquiring module (510, 630) is changed;
    a determining module (530, 650), configured to determine that a time sequence number, TSN, in the received frame jumps if the detecting module (520, 640) detects that the source identifier is changed;
    **characterized in that** the device further comprises:

    a second acquiring module (540, 660), configured to acquire an accumulative TSN jumping difference after a current jumping if the determining module (530, 650) determines that the TSN in the received frame jumps; and

a compensating module (550, 670), configured to compensate the TSN in the received frame after the current jumping by substracting the accumulative TSN jumping difference after the current jumping acquired by the second acquiring module (540, 660) from the TSN of the received frame after the current jumping;

wherein the second acquiring module (540, 660) further comprises:

a recording sub-module (541, 661), configured to record a TSN in a last frame before the current jumping and a TSN in a first frame after the current jumping, and calculate a current jumping difference according to the TSN in the last frame before the current jumping and the TSN in the first frame after the current jumping; and

a calculating sub-module (542, 662), configured to calculate the accumulative TSN jumping difference after the current jumping according to the current jumping difference and an accumulative TSN jumping difference before the current jumping.

6. The device according to claim 5, wherein when downlink discontinuous transmission, DTX, is enabled, the device further comprises:

a recording module (610), configured to record the TSN in the current received frame; and

an accumulating module (620), configured to increase the TSN in the current frame by 1 if no frame is received in a next system default interval.

**Patentansprüche**

1. Verfahren zum Detektieren und Verarbeiten des Springens von Zeitablaufnummern, **dadurch gekennzeichnet, dass** es Folgendes umfasst:

Erfassen eines Quellenidentifizierers in einem empfangenen Rahmen (201);
Detektieren, ob sich der erfasste Quellenidentifizierer geändert hat (202);
Bestimmen, dass eine Zeitablaufnummer, TSN, in dem empfangenen Rahmen springt, falls detektiert wird, dass sich der Quellenidentifizierer geändert hat (203, 204);
**dadurch gekennzeichnet, dass** das Verfahren ferner Folgendes umfasst:

wenn bestimmt wird, dass die TSN in dem empfangenen Rahmen springt, Erfassen eines akkumulierenden TSN-Sprungunterschieds nach einem aktuellen Springen; und Kompensieren der TSN in dem empfangenen Rahmen nach dem aktuellen Springen durch das Abziehen des akkumulierenden TSN-Sprungunterschieds nach dem aktuellen Springen von der TSN des empfangenen Rahmens nach dem aktuellen Springen (207); wobei das Erfassen des akkumulierenden TSN-Sprungunterschieds nach dem aktuellen Springen Folgendes umfasst: Aufzeichnen einer TSN in einem letzten Rahmen vor dem aktuellen Springen und einer TSN in einem ersten Rahmen nach dem aktuellen Springen; Berechnen eines aktuellen Sprungunterschieds in Übereinstimmung mit der TSN in dem letzten Rahmen vor dem aktuellen Springen und der TSN in dem ersten Rahmen nach dem aktuellen Springen (205); und Berechnen des akkumulierenden TSN-Sprungunterschieds nach dem aktuellen Springen in Übereinstimmung mit dem aktuellen Sprungunterschied und einem akkumulierenden TSN-Sprungunterschied vor dem aktuellen Springen (206).

2. Verfahren nach Anspruch 1, das ferner Folgendes umfasst:

Bestimmen, dass die TSN in dem empfangenen Rahmen nicht springt, falls detektiert wird, dass sich der Quellenidentifizierer nicht geändert hat.

3. Verfahren nach Anspruch 1 oder 2, wobei
sich der Quellenidentifizierer in einem Synchronisationsquellenidentifizierer-Feld, SSRC-Feld, in dem empfangenen Rahmen befindet.

4. Verfahren nach Anspruch 1 oder 2, wobei, wenn eine diskontinuierliche Abwärtsstreckenübertragung, DTX, freigegeben ist, das Verfahren vor dem Erfassen des Quellenidentifizierers in dem empfangenen Rahmen ferner Folgendes umfasst:

Aufzeichnen der TSN in dem aktuellen empfangenen Rahmen; und
falls kein Rahmen in einem nächsten Systemvorgabeintervall empfangen wird, Vergrößern der TSN in dem aktuellen Rahmen um 1.

5. Vorrichtung zum Detektieren und Verarbeiten des Springens von Zeitablaufnummern, **dadurch gekennzeichnet, dass** sie Folgendes umfasst:

ein erstes Erfassungsmodul (510, 630), das konfiguriert ist, einen Quellenidentifizierer in einem empfangenen Rahmen zu erfassen;
ein Detektionsmodul (520, 640), das konfiguriert ist, zu detektieren, ob sich der durch das erste Erfassungsmodul (510, 630) erfasste Quellenidentifizierer geändert hat;
ein Bestimmungsmodul (530, 650), das konfiguriert ist, zu bestimmen, dass eine Zeitablaufnummer, TSN, in dem empfangenen Rahmen springt, falls das Detektionsmodul (520, 640) detektiert, dass sich der Quellenidentifizierer geändert hat;
**dadurch gekennzeichnet, dass** die Vorrichtung ferner Folgendes umfasst:

ein zweites Erfassungsmodul (540, 660), das konfiguriert ist, einen akkumulierenden TSN-Sprungunterschied nach dem aktuellen Springen zu erfassen, falls das Bestimmungsmodul (530, 650) bestimmt, dass die TSN in dem empfangenen Rahmen springt; und
ein Kompensationsmodul (550, 670), das konfiguriert ist, die TSN in dem empfangenen Rahmen nach dem aktuellen Springen durch das Abziehen des von dem zweiten Erfassungsmodul (540, 660) erfassten akkumulierenden TSN-Sprungunterschieds nach dem aktuellen Springen von der TSN des empfangenen Rahmens nach dem aktuellen Springen zu kompensieren;

wobei das zweite Erfassungsmodul (540, 660) ferner Folgendes umfasst:

ein Aufzeichnungs-Untermodul (541, 661), das konfiguriert ist, eine TSN in einem letzten Rahmen vor dem aktuellen Springen und eine TSN in einem ersten Rahmen nach dem aktuellen Springen aufzuzeichnen und einen aktuellen Sprungunterschied in Übereinstimmung mit der TSN in dem letzten Rahmen vor dem aktuellen Springen und der TSN in dem ersten Rahmen nach dem aktuellen Springen zu berechnen; und
ein Berechnungs-Untermodul (542, 662), das konfiguriert ist, den akkumulierenden TSN-Sprungunterschied nach dem aktuellen Springen in Übereinstimmung mit dem aktuellen Sprungunterschied und einem akkumulierenden TSN-Sprungunterschied vor dem aktuellen Springen zu berechnen.

6. Vorrichtung nach Anspruch 5, wobei, wenn eine diskontinuierliche Abwärtsstreckenübertragung, DTX, freigegeben ist, die Vorrichtung ferner Folgendes umfasst:

ein Aufzeichnungsmodul (610), das konfiguriert ist, die TSN in dem aktuellen empfangenen Rahmen aufzuzeichnen; und
ein Akkumulationsmodul (620), das konfiguriert ist, die TSN in dem aktuellen Rahmen um 1 zu vergrößern, falls in einem nächsten Systemvorgabeintervall kein Rahmen empfangen wird.

**Revendications**

1. Procédé destiné à détecter et à traiter un saut de nombre de séquence temporelle, **caractérisé en ce qu'**il comprend :

l'acquisition d'un identifiant de source dans une trame reçue (201),
la détection de ce que l'identifiant de source acquis est modifié (202),
la détermination de ce qu'un nombre de séquence temporelle, TSN, dans la trame reçue effectue un saut s'il est détecté que l'identifiant de source est modifié (203, 204),
**caractérisé en ce que** le procédé comprend en outre :

lors de la détermination de ce que le nombre TSN dans la trame reçue effectue un saut, l'acquisition d'une différence de sauts de nombres TSN accumulative après un saut actuel, et

la compensation du nombre TSN dans la trame reçue après le saut actuel en soustrayant la différence de sauts de nombres TSN accumulative après le saut actuel du nombre TSN de la trame reçue après le saut actuel (207),

dans lequel l'acquisition de la différence de sauts de nombres TSN accumulative après le saut actuel comprend : l'enregistrement d'un nombre TSN dans une dernière trame avant le saut actuel ainsi que d'un nombre TSN dans une première trame après le saut actuel ; le calcul d'une différence de sauts actuelle en fonction du nombre TSN dans la dernière trame avant le saut actuel ainsi que du nombre TSN dans la première trame après le saut actuel (205) ; et le calcul de la différence de sauts de nombres TSN accumulative après le saut actuel en fonction de la différence de sauts actuelle et d'une différence de sauts de nombres TSN accumulative avant le saut actuel (206).

2. Procédé selon la revendication 1, comprenant en outre :

la détermination de ce que le nombre TSN dans la trame reçue n'effectue pas de saut s'il est détecté que l'identifiant de source n'est pas modifié.

3. Procédé selon la revendication 1 ou 2, dans lequel l'identifiant de source est situé dans un champ d'identifiant de source de synchronisation, SSRC, dans la trame reçue.

4. Procédé selon la revendication 1 ou 2, dans lequel, lorsqu'une transmission discontinue de liaison descendante, DTX, est autorisée, avant l'acquisition de l'identifiant de source dans la trame reçue, le procédé comprend en outre :

l'enregistrement du nombre TSN dans la trame reçue actuelle, et si aucune trame n'est reçue dans un intervalle suivant de défaut système, l'augmentation de 1 du nombre TSN dans la trame actuelle.

5. Dispositif destiné à détecter et à traiter un saut de nombre de séquence temporelle, **caractérisé en ce qu'**il comprend :

un premier module d'acquisition (510, 630), configuré pour acquérir un identifiant de source dans une trame reçue, un module de détection (520, 640), configuré pour détecter si l'identifiant de source acquis par le premier module d'acquisition (510, 630) est modifié, un module de détermination (530, 650), configuré pour déterminer qu'un nombre de séquence temporelle, TSN, dans la trame reçue effectue un saut si le module de détection (520, 640) détecte que l'identifiant de source est modifié, **caractérisé en ce que** le dispositif comprend en outre :

un second module d'acquisition (540, 660), configuré pour acquérir une différence de sauts de nombres TSN accumulative après un saut actuel si le module de détermination (530, 650) détermine que le nombre TSN dans la trame reçue effectue un saut, et un module de compensation (550, 670), configuré pour compenser le nombre TSN dans la trame reçue après le saut actuel en soustrayant la différence de sauts de nombres TSN accumulative après le saut actuel acquis par le second module d'acquisition (540, 660) du nombre TSN de la trame reçue après le saut actuel,

dans lequel le second module d'acquisition (540, 660) comprend en outre :

un sous module d'enregistrement (541, 661), configuré pour enregistrer un nombre TSN dans une dernière trame avant le saut actuel ainsi qu'un nombre TSN dans une première trame après le saut actuel, et pour calculer une différence de sauts actuelle en fonction du nombre TSN dans la dernière trame avant le saut actuel ainsi que le nombre TSN dans la première trame après le saut actuel, et un sous module de calcul (542, 662), configuré pour calculer la différence de sauts de nombres TSN accumulative après le saut actuel en fonction de la différence de sauts actuelle et d'une différence de sauts de nombres TSN accumulative avant le saut actuel.

6. Dispositif selon la revendication 5, dans lequel lorsqu'une transmission discontinue de liaison descendante, DTX, est autorisée, le dispositif comprend en outre :

un module d'enregistrement (610), configuré pour enregistrer le nombre TSN dans la trame reçue actuelle, et un module d'accumulation (620), configuré pour augmenter de 1 le nombre TSN dans la trame actuelle si aucune trame n'est reçue dans un intervalle suivant de défaut système.

FIG. 1

Acquire a source identifier — 201

Yes ← Detect whether the acquired source identifier is changed — 202

No ↓

Determine that a TSN in a received frame does not jump — 203

Determine that a TSN in a received frame jumps — 204

Record a TSN in a last frame before the current jumping and a TSN in a first frame after the current jumping, and calculate the current jumping difference according to the TSN in the last frame before the current jumping and the TSN in the first frame after the current jumping — 205

Calculate an accumulative TSN jumping difference after the current jumping according to the current jumping difference and an accumulative TSN jumping difference before the current jumping — 206

Compensate the TSN in the received frame after the current jumping according to the accumulative TSN jumping difference after the current jumping — 207

FIG. 2

```
┌─────────────────────────────────────────────────────────────┐
│         Record a TSN in a current received frame              │─── 301
└─────────────────────────────────────────────────────────────┘
                              │
                              ▼
┌─────────────────────────────────────────────────────────────┐
│ If no frame is received in a next system default interval,    │─── 302
│         increase the TSN in the current frame by 1            │
└─────────────────────────────────────────────────────────────┘
                              │
                              ▼
┌─────────────────────────────────────────────────────────────┐
│              Acquire a source identifier                      │─── 303
└─────────────────────────────────────────────────────────────┘
                              │
                              ▼
                        ╱───────────╲
        Yes         ╱   Detect whether the       ╲       304
     ◄─────────────    acquired source identifier is changed
                        ╲───────────╱
                              │ No
                              ▼
┌─────────────────────────────────────────────────────────────┐
│      Determine that a TSN in a received frame does not jump   │─── 305
└─────────────────────────────────────────────────────────────┘
                              │
                              ▼
┌─────────────────────────────────────────────────────────────┐
│        Determine that a TSN in a received frame jumps         │─── 306
└─────────────────────────────────────────────────────────────┘
                              │
                              ▼
┌─────────────────────────────────────────────────────────────┐
│ Record a TSN in a last frame before the current jumping       │
│ and a TSN in a first frame after the current jumping, and     │─── 307
│ calculate a current jumping difference according to the       │
│ TSN in the last frame before the current jumping and the      │
│ TSN in the first frame after the current jumping              │
└─────────────────────────────────────────────────────────────┘
                              │
                              ▼
┌─────────────────────────────────────────────────────────────┐
│ Calculate an accumulative TSN jumping difference after        │
│ the current jumping according to the current jumping          │─── 308
│ difference and an accumulative TSN jumping difference         │
│ before the current jumping                                    │
└─────────────────────────────────────────────────────────────┘
                              │
                              ▼
┌─────────────────────────────────────────────────────────────┐
│ Compensate the TSN in the received frame after the            │
│ current jumping according to the accumulative TSN             │─── 309
│ jumping difference after the current jumping                  │
└─────────────────────────────────────────────────────────────┘
```

FIG. 3

First acquiring module —— 410

Detecting module —— 420

Determining module —— 430

FIG. 4

540

550

510

Second acquiring module 541

Compensating module

First acquiring module

Recording sub-module

542

530

520

Calculating sub-module

Determining module

Detecting module

FIG. 5

610
620

Recording module — Accumulating module

660
670
630

Second acquiring module
661

Compensating module — First acquiring module

Recording sub-module

662
650
640

Calculating sub-module — Determining module — Detecting module

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080151901 A1

**Non-patent literature cited in the description**

- Intermedia synchronization for videoconference over IP. SIGNAL PROCESSING: IMAGE COMMUNICATION. ELSEVIER SCIENCE PUBLISHERS, 01 September 1999, vol. 15